# EUROPEAN PATENT APPLICATION

(11) **EP 4 787 680 A1**
(43) Date of publication of application: **05.08.2026**
(21) Application number: 24872920.4
(22) Date of filing: 25.09.2024
(51) Int. Cl.: H02K 7/14, H02K 7/11, H02K 7/00, H02K 3/50, F16D 65/14, B60T 13/74, F16D 121/24

(54) **MOTOR**

(30) Priority: 25.09.2023 KR 20230128226
(71) Applicant: LG Innotek Co., Ltd., Seoul 07796 (KR)
(72) Inventor: JUNG, Young Hwan, Seoul 07796 (KR)
(74) Representative: Plasseraud IP
(86) International application number: PCT/KR2024/014513
(87) International publication number: WO 2025/071212

(57) **Abstract**

The present invention may provide a motor including a shaft, a rotor coupled to the shaft, a stator disposed to correspond to the rotor, a locking part disposed at one side of the shaft, a housing which accommodates the stator, a terminal part disposed on the stator, and a wire which connects the locking part and the terminal part, wherein the wire is disposed along a space between the locking part and the housing and a space between the stator and the housing and connected to the terminal part.

## Description

### [Technical Field]

The present invention relates to a motor.

### [Background Art]

An electronic braking system of a vehicle is a system which brakes a vehicle through the operation of a motor and a speed reducer, is lighter, and more responsive and requires less installation space than a mechanical braking system. In addition, an electric parking brake of a vehicle is a device which automatically operates using an actuator according to an operation state of a vehicle even when a driver does not manually operate the vehicle.

Such an electric parking brake may be formed in a structure in which a shoe in a drumin-hat (DIH) of a wheel extends due to tension generated by pulling a parking cable through the rotation of a motor to secure a braking force or a spindle moves a piston forward through the rotation of a motor to bring a disk into close contact with a pad to secure a braking force.

Since the structure of the electric parking brake should be added to the electronic braking system to implement an electric parking brake function, there are problems that a large installation space is required, and a structure of related components such as a speed reducer is complicated.

### [Detailed Description of Invention]

### [Technical Problem]

Therefore, the present invention is to solve the above-described problems and is directed to providing a motor in which a parking brake function is added to an electronic braking system to simplify a structure of an entire braking system.

Objectives to be achieved by the present invention are not limited to the above-described objectives, and other objectives that are not described above may be clearly understood by those skilled in the art through the following specification.

### [Technical Solution]

An embodiment may provide a motor including a shaft, a rotor coupled to the shaft, a stator disposed to correspond to the rotor, a locking part which is disposed at one side of the shaft and restricts rotation of the shaft as needed, a housing which accommodates the stator, a terminal part disposed on the stator, and a wire which connects the locking part and the terminal part, wherein the wire is disposed along a space between the locking part and the housing and a space between the stator and the housing and connected to the terminal part.

The motor may include a plate disposed in the housing, wherein the plate may be in contact with the locking part such that the housing and the locking part form a space by being disposed to be spaced apart from each other in an axial direction of the shaft, and the wire may be disposed in the space.

A portion of the shaft and a portion of the locking part may overlap in an axial direction and a radial direction.

The locking part may include a stopper which moves in an axial direction and comes into contact with the shaft such that the shaft does not rotate.

The plate may include a plate body in contact with the locking part and a leg portion which extends from the plate body and is in contact with the housing, wherein the body may be disposed to be spaced apart from the housing.

The housing may include a groove portion disposed in an inner circumferential surface thereof, and a portion of the wire may be disposed in the groove portion.

The housing may include a housing body and a first cover coupled to the housing body, wherein the groove portion may include a first groove and a second groove which communicate with each other, the first groove may be disposed in the first cover, and the second groove may be disposed in the housing body.

The motor may further include a wire holder, wherein the wire holder may be disposed in the second groove, and the wire may be disposed in the wire holder.

The motor may further include a mold part disposed on the stator, wherein the terminal part may include a first terminal and a second terminal which are connected to each other, the first terminal may be disposed on the mold part, and the second terminal may be disposed on the wire holder and connected to the wire located in the wire holder.

The mold part and a portion of the wire holder may be disposed to overlap in a radial direction.

### [Advantageous Effects]

According to one embodiment of the present invention, since a parking brake function is added to an electronic braking system, there is an advantage of simplifying a structure of an entire braking system.

According to one embodiment of the present invention, since a shaft of a motor of the electric parking system is directly restricted, a separate parking brake does not need to be provided, and thus, there are advantages that an installation space can be reduced, and the number of components can be reduced.

According to one embodiment of the present invention, since a stopper is disposed to overlap the shaft in an axial direction, there is an advantage that a size of a component for implementing the parking brake function is minimized.

According to one embodiment of the present invention, since a wire connected to a locking part is disposed in a housing without being exposed to the outside of the housing, there is an advantage that a leakage problem occurring due to the wire exposed to the outside is essentially prevented.

### [Description of Drawings]

FIG. 1 is a view illustrating a motor according to an embodiment.
FIG. 2 is a side view of the motor illustrated in FIG. 1.
FIG. 3 is an exploded view of a locking part.
FIG. 4 is a side cross-sectional view of the locking part.
FIG. 5 is a view illustrating a shaft and the locking part.
FIG. 6 is a view illustrating a first part and a second cylinder of a stopper.
FIG. 7 shows views illustrating a state in which the stopper moves as a current is applied to the locking part.
FIG. 8 is a view illustrating a state in which the shaft is restricted by the locking part.
FIG. 9 is a view illustrating the locking part, a terminal part, a wire, and a plate.
FIG. 10 is a view illustrating a housing body of a housing.
FIG. 11 is a view illustrating a first cover of the housing.
FIG. 12 is a view illustrating an assembly processor of the locking part.
FIG. 13 is a perspective view illustrating the plate.
FIG. 14 is a view illustrating a state in which the locking part is disposed in the housing.
FIG. 15 is a side view illustrating an arrangement state of the wire.
FIG. 16 is a view illustrating a mold part.
FIG. 17 is an enlarged view illustrating connection of the wire and the terminal part.

### [Modes of the Invention]

Hereinafter, exemplary embodiments of the present invention will be described in detail with reference to the accompanying drawings.

However, the technical spirit of the present invention is not limited to the few embodiments which will be described and may be implemented in a variety of different forms, and one or more components of the embodiments may be selectively combined, substituted, and used within the range of the technical spirit of the present invention.

In addition, unless clearly and specifically defined otherwise by the context, all terms (including technical and scientific terms) used herein can be interpreted as having meanings customarily understood by those skilled in the art, and the meanings of generally used terms, such as those defined in commonly used dictionaries, will be interpreted in consideration of contextual meanings of the related art.

In addition, the terms used in the embodiments of the present invention are considered in a descriptive sense only and not to limit the present invention.

In the present specification, unless specifically indicated otherwise by the context, singular forms include plural forms, and in a case in which "at least one (or one or more) among A, B, and C" is described, this may include at least one combination among all possible combinations of A, B, and C.

In addition, in descriptions of components of the present invention, terms such as "first," "second," "A," "B," "(a)," and "(b)" may be used.

The terms are only to distinguish one component from another component, and the essence, order, and the like of the components are not limited by the terms.

In addition, it should be understood that, when a certain component is referred to as being "connected," "coupled," or "linked" to another component, such a description may include both a case in which the certain component is directly connected, coupled, or linked to another component, and a case in which the certain component is connected, coupled, or linked to another component with still another component disposed therebetween.

In addition, when a first component is described as being formed or disposed "on (above)" or "under (below)" a second component, such a description includes both a case in which the two components are formed or disposed in direct contact with each other and a case in which one or more other components are interposed between the two components. In addition, when a first component is described as being formed "on (above) or under (below)" a second component, such a description may include a case in which the first component is formed at an upper side or a lower side with respect to the second component.

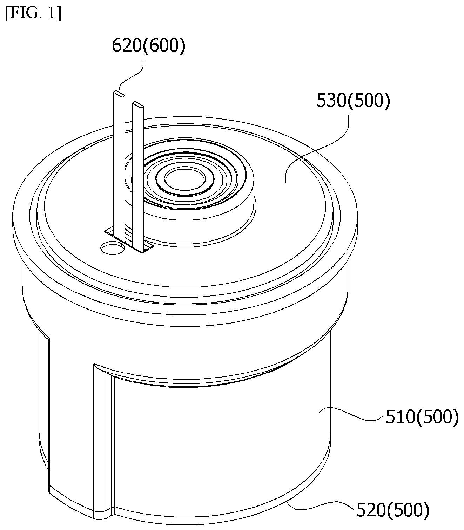

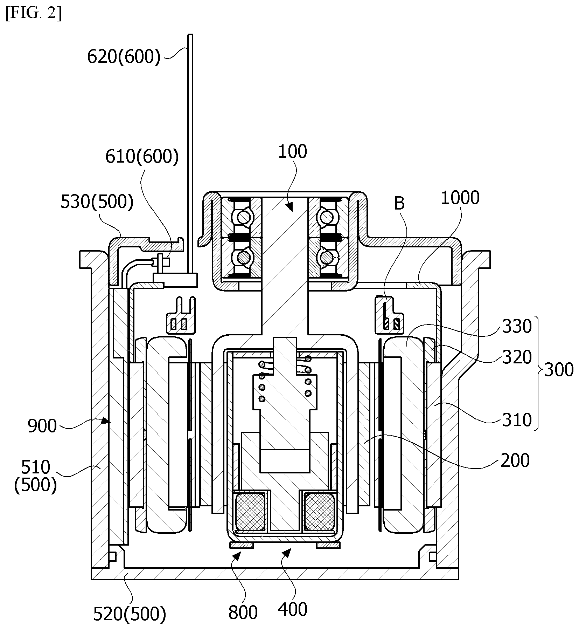

FIG. 1 is a view illustrating a motor according to an embodiment, and FIG. 2 is a side view of the motor illustrated in FIG. 1.

Referring to FIGS. 1 and 2, the motor according to the embodiment may include a shaft 100, a rotor 200, a stator 300, a locking part 400, a housing 500, a terminal part 600, a wire 700, a plate 800, a wire holder 900, and a mold part 1000.

Hereinafter, the term "inward" refers to a direction toward the shaft 100 in a radial direction of the motor, and the term "outward" refers to a direction opposite to "inward." In addition, hereinafter, a circumferential direction and the radial direction are defined based on an axial center of the motor.

Hereinafter, the motor has a parking brake function in addition to a braking function.

The shaft 100 may be rotatably supported by a bearing in an axial direction. In the shaft 100, portions with different outer diameters may be divided and disposed in the axial direction.

The rotor 200 rotates through an electromagnetic interaction with the stator 300. The rotor 200 may include a magnet disposed on an outer circumferential surface of the shaft 100.

The stator 300 is disposed outside the rotor 200. The stator 300 may include a stator core 310, an insulator 320, and a coil 330. The insulator 320 is mounted on the stator core 310. The coil 330 may be wound around the insulator 320. The insulator 320 is disposed between the coil 330 and the stator core 310 and electrically insulates the stator core 310 from the coil 330. The coil 330 induces an electromagnetic interaction with a magnet 220 of the rotor 200.

The locking part 400 is disposed in the shaft 100. The locking part 400 is a device which implements a braking function by restricting the shaft 100 not to rotate when a vehicle stops and a signal is applied to the locking part 400. The locking part 400 is connected to the terminal part 600.

The housing 500 is disposed outside the stator 300.

The terminal part 600 transmits power or a control signal to the locking part 400. The terminal part 600 includes a first terminal 610 and a second terminal 620. The first terminal 610 is connected to the wire 700, and the second terminal 620 is connected to the first terminal 610. In addition, the second terminal 620 is connected to an external power source.

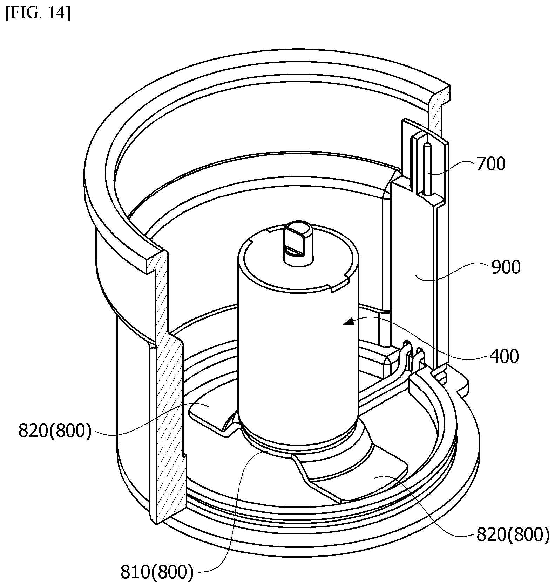

The wire 700 is connected to the locking part 400. In addition, the wire 700 (see FIG. 14) is connected to the first terminal 610. The wire 700 (see FIG. 14) may be disposed in the housing 500.

The plate 800 is disposed under the locking part 400. The plate 800 is fixed to the housing 500. The locking part 400 may be fixed to the plate 800.

The wire holder 900 accommodates the wire 700. The wire holder 900 may be fixed to the housing 500.

The mold part 1000 may be disposed on the stator 200. In addition, the mold part 1000 may be disposed outside a busbar B.

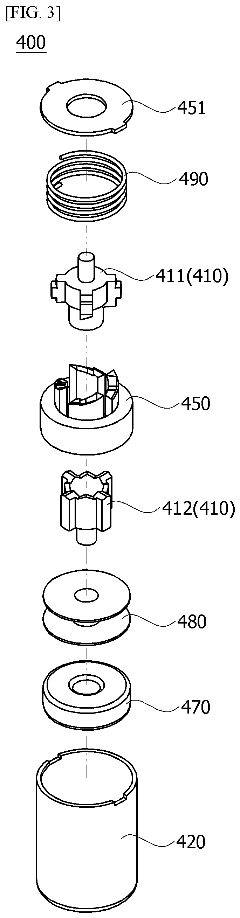

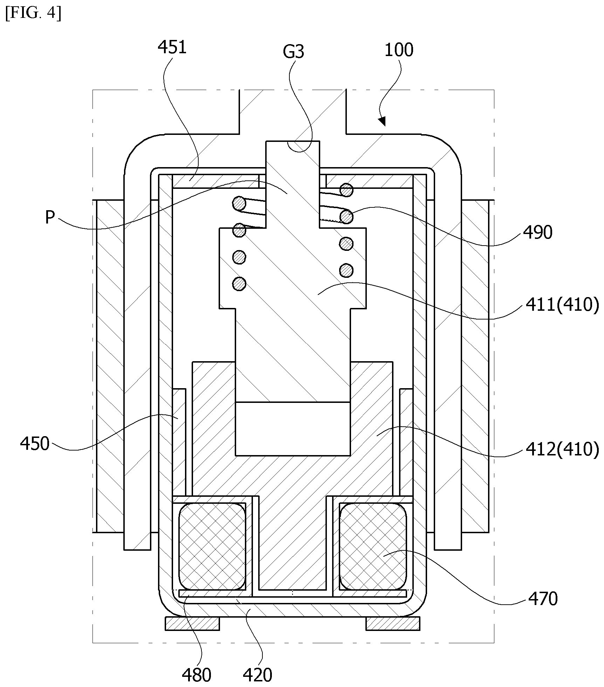

FIG. 3 is an exploded view of the locking part 400, and FIG. 4 is a side cross-sectional view of the locking part 400.

Referring to FIGS. 3 and 4, the locking part 400 may include a stopper 410, a case 420, a second cylinder 450, a second coil 470, and a second elastic member 490.

The stopper 410 may include a first part 411 and a second part 412. The first part 411 is stacked on the second part 412 in the axial direction. The first part 411 is formed to move in conjunction with movement of the second part 412 when the second part 412 moves. The first part 411 includes a protrusion P. The second part 412 electromagnetically interacts with the second coil 470 to linearly move along an inner side of the second cylinder 450.

The case 420 may be a cylindrical member with an accommodation space therein. The case 420 may include a cover 451 which covers an open upper portion.

The second cylinder 450 is disposed in the case 420.

The second coil 470 may be disposed in the case 420 at one side of the second cylinder 450. The second coil 470 may be coupled to a bobbin 470. The bobbin 470 is disposed at one side of the second cylinder 450. The second coil 470 is connected to an external connector.

The second elastic member 490 is disposed between an inner wall of the case 420 and the first part 411 in the axial direction. The second elastic member 490 may be a coil spring having a restoring force when contracted. The first part 411 is spaced apart from the shaft 100 due to the restoring force of the second elastic member 490.

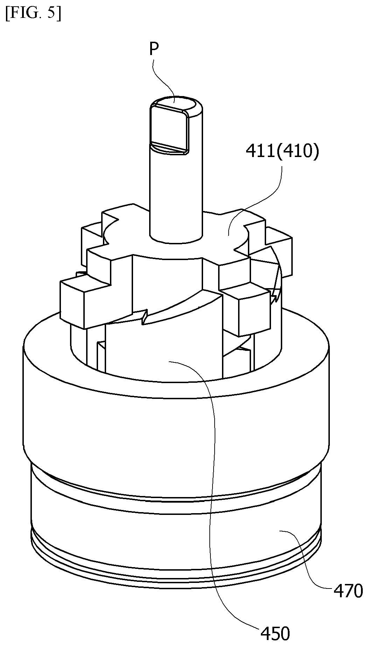

FIG. 5 is a view illustrating the shaft 100 and the locking part 400.

Referring to FIGS. 4 and 5, the first part 411 may include the protrusion P.

As the stopper 410 of the locking part 400 moves in the axial direction, the protrusion P is inserted into a groove G3 of the shaft 100, and thus the shaft 100 is restricted by the stopper 410 and is not rotated.

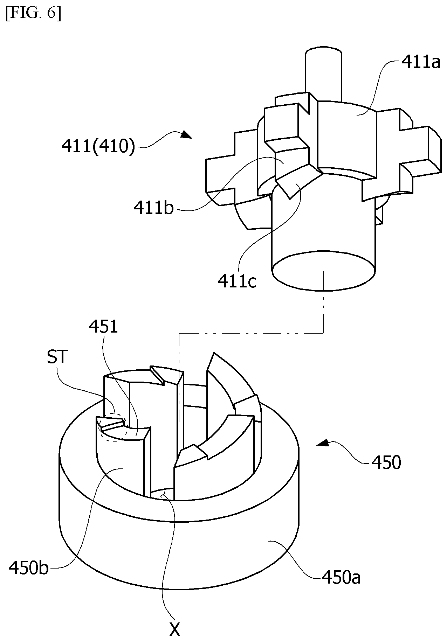

FIG. 6 is a view illustrating the first part 411 and the second cylinder 450 of the stopper 410.

Referring to FIGS. 5 and 6, The first part 411 may include a cylindrical body 411a and a plurality of wing parts 411b protruding from an outer circumferential surface of the body 411a. The second elastic member 490 is seated on one side surface of the wing parts 411b. Each of the wing parts 411b may include a first surface 411c disposed on the other side surface. The first surface 411c is a surface in contact with a second surface 451 disposed on one side end of the second cylinder 450 or one side surface of the second part 412. The first surface 411c may be obliquely formed.

The second cylinder 450 may include a cylinder body 450a and a plurality of columns 450b protruding from the cylinder body 450a. Gaps X are formed to be spaced a predetermined distance from each other by the plurality of columns 450b. Each of the columns 450b includes the second surface 451. The second surface 451 may be obliquely disposed to correspond to the first surface 411c and formed to form a step ST.

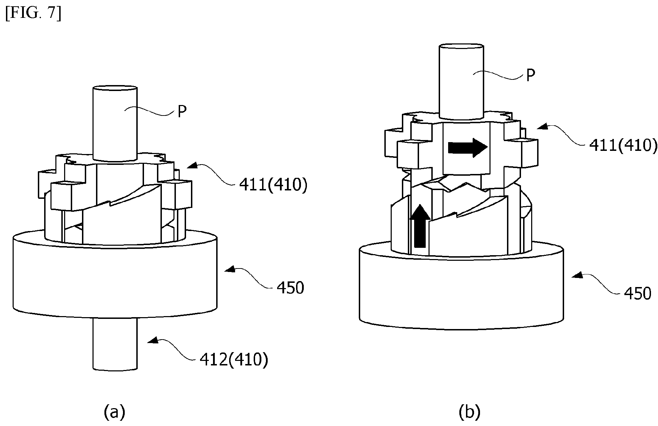

FIG. 7 shows views illustrating a state in which the stopper 410 moves as a current is applied to the locking part 400.

As illustrated in FIG. 7A, when the vehicle is traveling or stopped and there is no additional signal, power is not applied to the second coil 470, and the protrusion P is positioned to be spaced apart from the groove G3 due to the restoring force of the second elastic member 490. The shaft 100 is not restricted by the stopper 410 and is rotated due to the electromagnetic interaction between the rotor 200 and the stator 300.

As illustrated in FIG. 7B, when the vehicle is parked, and a signal related to a parking brake such that power is applied to the second coil 470, the second part 412 of the stopper 410 linearly moves along the second cylinder 450 due to an electromagnetic interaction between the second coil 470 and the stopper 410. The second part 412 of the stopper 410 overcomes the restoring force of the second elastic member 490 and linearly moves toward the shaft 100. When the second part 412 moves, in a state in which one side surface of the second part 412 is in contact with the first surface 411c of the first part 411, the first part 411 is moved toward the shaft 100 by the second part 412. In this case, since a surface of the second part 412 in contact with the first surface 411c of the first part 411 is obliquely disposed, the first part 411 moves toward the shaft 100 while rotating. In addition, in a state in which the groove G3 and the protrusion P are aligned, the protrusion P is inserted into the groove G3 of the shaft 100.

In this case, the first surface 411c of the first part 411 and the step ST of the second cylinder 450 are aligned.

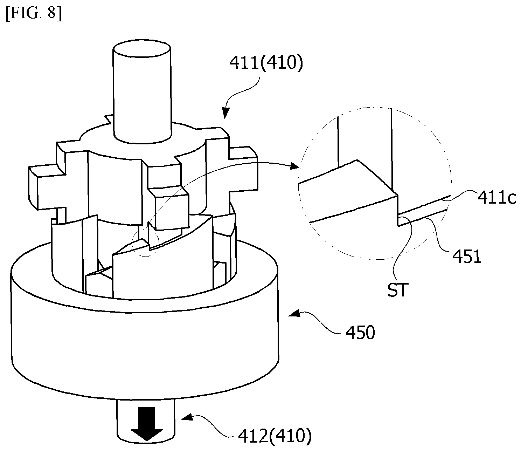

FIG. 8 is a view illustrating a state in which the shaft 100 is restricted by the locking part 400.

Referring to FIG. 8, when a current being supplied to the second coil 470 is not supplied, the second part 412 moves away from the shaft 100, the first part 411 moves due to the restoring force of the second elastic member 490, and thus the first surface 411c of the first part 411 is caught on the step ST of the second cylinder 450. Since the second cylinder 450 is fixed, the first part 411 is restricted by the second cylinder 450 in a rotational direction. As a result, in a state in which the protrusion P2 is inserted into the groove G3, the shaft 100 is restricted by the first part 411, and thus a parking brake function is performed.

Since the first part 411 of the locking part 400 is caught on the step ST, even when the current being supplied to the second coil 470 is not supplied, rotation of the shaft 100 prevented. Accordingly, power does not need to be continuously supplied to the locking part 400 for performing the parking brake function.

When the restriction of the shaft 100 is released and the current is applied to the second coil 470 again, the second part 412 of the stopper 410 overcomes the restoring force of the second elastic member 490, linearly moves toward the shaft 100, and lifts the first part 411 up so that the first part 411 is spaced apart from the second cylinder 450. In this case, the first part 411 rotates such that the wing part 411b of the first part 411 is aligned with the gap X of the second cylinder 450. In addition, when the current applied to the second coil 470 is stopped, the first part 411 moves downward, the protrusion P comes out of the groove G3, and the stopper 410 is separated from the shaft 100 so that the restriction of the shaft 100 is released.

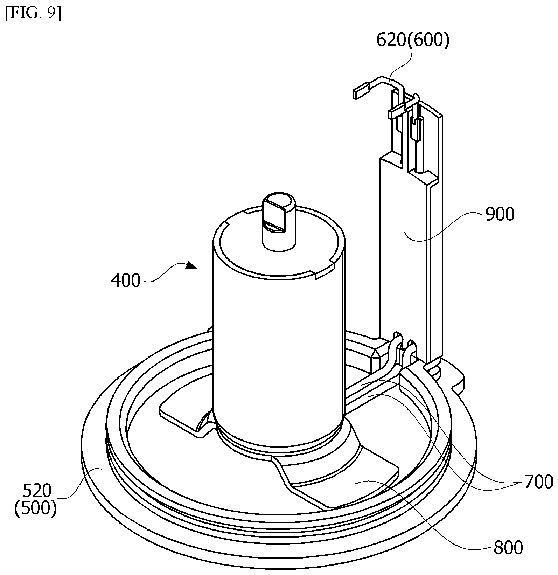

FIG. 9 is a view illustrating the locking part 400, the terminal part 600, the wire 700, and the plate 800.

Referring to FIG. 9, the locking part 400 is fixed to the housing 500. For example, the locking part 400 may be fixed to the first cover 520 of the housing 500 through the plate 800. The plate 800 is coupled to the first cover 520. The case 420 of the locking part 400 may be fixed to the plate 800.

The locking part 400 is connected to the wire 700. The locking part 400 may receive power through the wire 700 and transmit or receive a control signal therethrough. Since the wire 700 is connected to a bottom of the locking part 400, a space in which the wire 700 is located is needed between the case 420 of the locking part 400 and the first cover 510. A portion of the plate 800 is spaced apart from the first cover 510 to secure the space in which the wire 700 is located.

The wire 700 is guided along the first cover 510 and fixed by the wire holder 900 in the axial direction. The wire holder 900 is disposed in the axial direction. The wire holder 900 may be disposed on an edge of the first cover 510. The wire holder 900 may be an injection molded mold part.

The second terminal 620 of the terminal part 600 may be connected to an end of the wire 700.

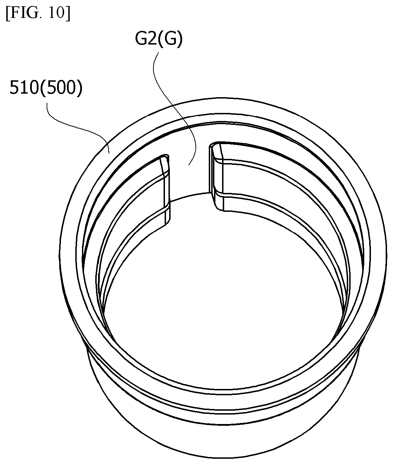

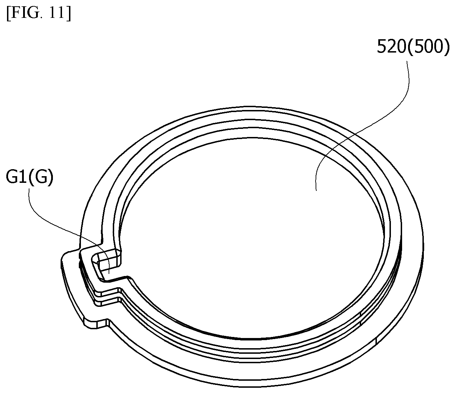

FIG. 10 is a view illustrating a housing body 510 of the housing 500, and FIG. 11 is a view illustrating the first cover 520 of the housing 500.

Referring to FIGS. 1, 10, and 11, the housing 500 may include the housing body 510, the first cover 520, and a second cover 530. The housing body 510 may be a cylindrical member having one side and the other side which are open. The first cover 520 is coupled to one side of the housing body 510 and covers the one open side of the housing body 510. The second cover 530 is coupled to the other side of the housing body 510 and covers the other open side of the housing body 510.

The housing 500 may include a groove portion G. The groove portion G is for accommodating the wire 700. The groove portion G may include a first groove G1 and a second groove G2. The first groove G1 is disposed in the first cover 520. The first groove G1 may be disposed at the edge of the first cover 520. The first groove G1 is aligned with the wire holder 900. The second groove G2 is disposed in the housing body 510. The second groove G2 may be concavely formed in the housing body 510. The second groove G2 may be disposed to extend in the axial direction.

The wire holder 900 is disposed in the second groove G2.

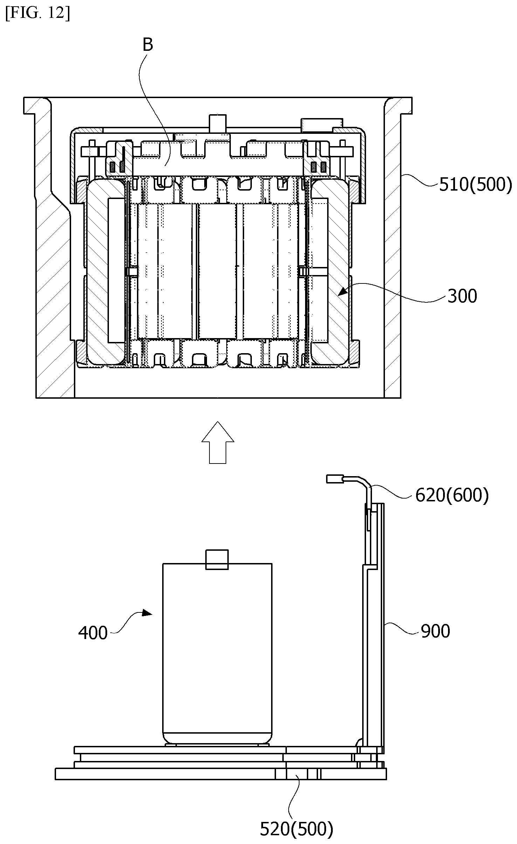

FIG. 12 is a view illustrating an assembly processor of the locking part 400.

Referring to FIG. 12, the locking part 400 is coupled to the first cover 520. In addition, the wire holder 900 is coupled to the first cover 520. The wire 700 is fixed by the wire holder 900.

The stator 300 is disposed in the housing body 510. The busbar B may be fixed on the stator 300. In a state in which the locking part 400, the wire holder 900, and the wire 700 are fixed to the first cover 520, the first cover 520 may be assembled to the housing body 510.

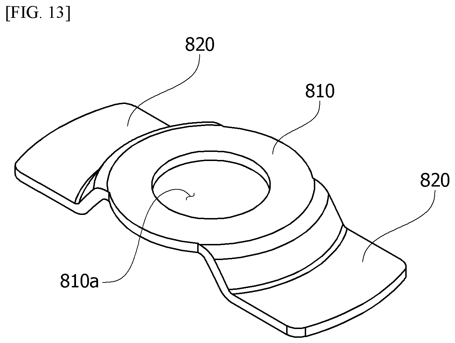

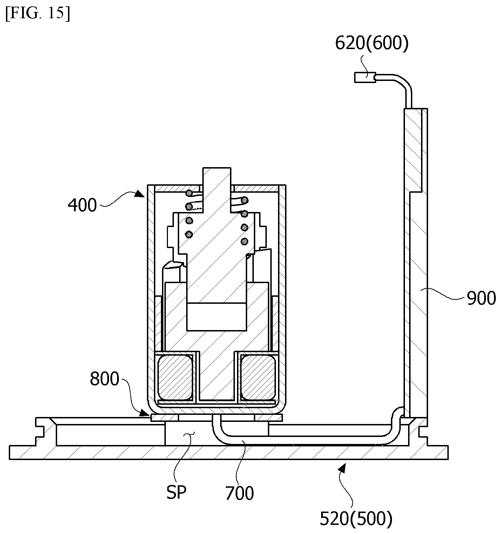

FIG. 13 is a perspective view illustrating the plate 800, FIG. 14 is a view illustrating a state in which the locking part 400 is disposed in the housing 500, and FIG. 15 is a side view illustrating an arrangement state of the wire 700.

Referring to FIGS. 13 and 15, the plate 800 may include a plate body 810 and leg portions 820. Two leg portions 820 may be connected to both end portions of the plate body 810. The plate body 810 is in contact with the case 420 of the locking part 400. The plate body 810 is disposed to be spaced apart from the first cover 520. This is for securing a space SP for the wire 700 under the locking part 400.

The plate body 810 may have a circular shape. A hole 810a may be disposed in a central portion of the plate body 810.

Each of the leg portions 820 is coupled to the first cover 520. The leg portion 820 may include a bent region connected to the plate body 810 due to a height difference from the plate body 810.

The wire 700 connected to the locking part 400 is guided to the space SP secured by the plate 800 and then guided to the edge of the first cover 520 along a bottom of the first cover 520. The wire 700 guided to the edge of the first cover 520 is accommodated in the wire holder 900 and guided in the axial direction.

The second terminal 620 of the terminal part 600 is connected to the end of the wire 700.

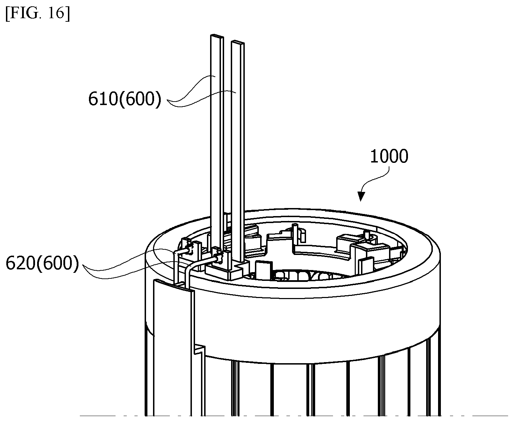

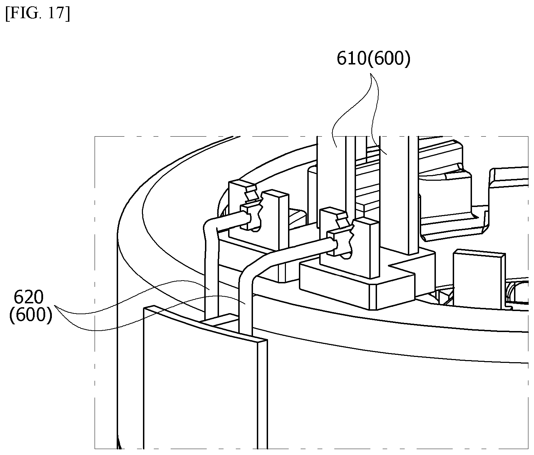

FIG. 16 is a view illustrating the mold part 1000, and FIG. 17 is an enlarged view illustrating connection of the wire 700 and the terminal part 600.

Referring to FIGS. 15 and 16, the mold part 1000 may be disposed on the stator 300. The mold part 1000 may be an annular member. The mold part 1000 may be disposed outside the busbar B

The first terminal 610 of the terminal part 600 is disposed on the mold part 1000. The first terminal 610 may be disposed to extend in the axial direction. The first terminal 610 is connected to the external power source.

The second terminal 620 is connected to the wire 700. The second terminal 620 may be a flexible shunt wire. The second terminal 620 may be connected to the first terminal 610 on the mold part 1000. The second terminal 620 may be bent toward and connected to the first terminal 610.

As described above, when the wire 700 connected to the locking part 400 is connected to the external power source through the first terminal 610 and the second terminal 620 without being exposed to the outside of the housing 500, a leakage problem which may occur due to assembly with the other components as the wire 700 is externally exposed can be essentially prevented.

The motor according to one exemplary embodiment of the present invention has been described above with reference to the accompanying drawings.

The above-described embodiments should be considered in a descriptive sense only and not for purposes of limitation, and the scope of the present invention is defined not by the detailed description but by the appended claims. In addition, it should be interpreted that the scope of the present invention encompasses all modifications and alterations derived from meanings and the scope and equivalents of the appended claims.

## Claims

1. A motor comprising:
a shaft;
a rotor coupled to the shaft;
a stator disposed to correspond to the rotor;
a locking part which is disposed at one side of the shaft and configured to restrict rotation of the shaft;
a housing which accommodates the stator;
a terminal part disposed on the stator; and
a wire which connects the locking part and the terminal part,
wherein the wire is disposed along a space between the locking part and the housing and a space between the stator and the housing and connected to the terminal part.

2. The motor of claim 1, comprising a plate disposed in the housing,
wherein the plate is in contact with the locking part such that the housing and the locking part form a space by being disposed to be spaced apart from each other in an axial direction of the shaft, and
the wire is disposed in the space.

3. The motor of claim 1, wherein a portion of the shaft and a portion of the locking part overlap in an axial direction and a radial direction.

4. The motor of claim 1, wherein the locking part includes a stopper which moves in an axial direction and comes into contact with the shaft such that the shaft does not rotate.

5. The motor of claim 1, wherein the plate includes:
a plate body in contact with the locking part; and
a leg portion which extends from the plate body and is in contact with the housing,
wherein the body is disposed to be spaced apart from the housing.

6. The motor of claim 1, wherein:
the housing includes a groove portion disposed in an inner circumferential surface thereof; and
a portion of the wire is disposed in the groove portion.

7. The motor of claim 6, wherein the housing includes:
a housing body; and
a first cover coupled to the housing body,
wherein the groove portion includes a first groove and a second groove which communicate with each other,
the first groove is disposed in the first cover, and
the second groove is disposed in the housing body.

8. The motor of claim 7, further comprising a wire holder,
wherein the wire holder is disposed in the second groove, and
the wire is disposed in the wire holder.

9. The motor of claim 8, further comprising a mold part disposed on the stator,
wherein the terminal part includes a first terminal and a second terminal which are connected to each other,
the first terminal is disposed on the mold part, and
the second terminal is disposed on the wire holder and connected to the wire located in the wire holder.

10. The motor of claim 9, wherein the mold part and a portion of the wire holder are disposed to overlap in a radial direction.
